# EUROPÄISCHE PATENTSCHRIFT

(11) **EP 4 623 432 B1**
(45) Veröffentlichungstag und Bekanntmachung des Hinweises auf die Patenterteilung: **12.08.2026**
(21) Anmeldenummer: 23840749.8
(22) Anmeldetag: 28.12.2023
(51) Int. Cl.: G08C 17/02

(54) **EINRICHTUNG ZUR STEUERUNG VON ZUMINDEST EINEM IN EIN, INSBESONDERE ZUR INTERAKTION MIT ZUMINDEST EINEM MASCHINELLEN PROZESS, BEISPIELSWEISE IN EINEM INDUSTRIELLEN UMFELD, BILDBARES SYSTEM INTEGRIERBAREN ERSTEN FUNKSENDE-/FUNKEMPFANGSGERÄT, FUNKSENDE-/FUNKEMPFANGSGERÄT, SYSTEM UND VERFAHREN ZUR STEUERUNG**
APPARATUS FOR CONTROLLING AT LEAST ONE FIRST RADIO TRANSMISSION/RADIO RECEIVING DEVICE WHICH CAN BE INTEGRATED IN A FORMABLE SYSTEM, IN PARTICULAR FOR INTERACTION WITH AT LEAST ONE AUTOMATIC PROCESS, FOR EXAMPLE IN AN INDUSTRIAL ENVIRONMENT, RADIO TRANSMISSION/RADIO RECEIVING DEVICE, SYSTEM AND METHOD FOR CONTROLLING
APPAREIL DE COMMANDE D'AU MOINS UN PREMIER DISPOSITIF D'ÉMISSION/RÉCEPTION RADIO QUI PEUT ÊTRE INTÉGRÉ DANS UN SYSTÈME FORMABLE, EN PARTICULIER POUR UNE INTERACTION AVEC AU MOINS UN PROCESSUS AUTOMATIQUE, PAR EXEMPLE DANS UN ENVIRONNEMENT INDUSTRIEL, DISPOSITIF D'ÉMISSION/RÉCEPTION RADIO, SYSTÈME ET PROCÉDÉ DE COMMANDE

(30) Priorität: 13.01.2023 DE 102023200259
(43) Veröffentlichungstag der Anmeldung: 01.10.2025
(73) Patentinhaber: Siemens Aktiengesellschaft, 80333 München (DE)
(72) Erfinder: DÖRICHT, Volkmar, 80803 München (DE); MICHAILOW, Nicola, 81825 München (DE)
(74) Vertreter: Siemens Patent Attorneys
(86) Internationale Anmeldenummer: PCT/EP2023/087889
(87) Internationale Veröffentlichungsnummer: WO 2024/149615

(56) Entgegenhaltungen:
- EP-A2- 3 572 914
- US-A1- 2018 049 794

## Beschreibung

Die Erfindung betrifft eine Einrichtung zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät gemäß dem Oberbegriff des Anspruchs 1, ein Funksende-/Funkempfangsgerät gemäß dem Oberbegriff des Anspruchs 11, ein System gemäß dem Oberbegriff des Anspruchs 12, sowie ein Verfahren zur Steuerung gemäß dem Oberbegriff des Anspruchs 13.

Der Einsatz von Funksende-/Funkempfangsgeräten, insbesondere mobilen Funksende-/Funkempfangsgeräten, in mobilen Funkkommunikationsnetzen gemäß Funkkommunikationsstandards wie dem "Global System Mobile"-, GSM- oder 2G-, 3G- oder "Long Term Evolution"-, LTE oder 4G-Standard ist bekannt. Die genannten Standards zeichneten sich typischerweise vor allem dadurch aus, dass die jeweils nachfolgende Entwicklung den Funksende-/Funkempfangsgeräten mehr Bandbreite für die Kommunikation ermöglichten, die zunehmend auch für mobile Datenübertragung, insbesondere zur Nutzung des so genannten mobilen Internets genutzt wurde. Zeitgleich stieg die Mächtigkeit der Funksende-/Funkempfangsgeräte und es wurden vielerlei Applikationen entwickelt, die einen über die reine Kommunikation und Internetnutzung hinausgehenden Einsatz der Funksende-/Funkempfangsgeräte ermöglichten.

Diese im Wesentlichen im privaten Umfeld genutzten Funktionen legten auch zunehmend eine Nutzung im industriellen/maschinellen Umfeld nahe, was dazu führte, dass der gegenwärtige Mobilfunkstandard der fünften Generation, 5G, unter anderem auch nicht nur Bandbreitenerhöhung brachte, sondern auch eine Erhöhung der Zellenanzahl sowie auch kleinere, insbesondere isolierbare, Zellen ermöglichte, und beispielsweise eine isolierte Funkversorgung ohne Zugriff von Dritten erlaubte, die vor allem eine industrielle Nutzung der Funktionen von Funksende-/Funkempfangsgeräten ermöglichte.

Es ist zu erwarten, dass drahtlose Kommunikationssysteme der nächsten Generation, also der 6. Generation, 6G, des Mobilfunkstandards, mehrere Funktionalitäten in die durch die Funksende-/Funkempfangsgeräte genutzte, auch als drahtlose Schnittstelle bezeichnete, Luftschnittstelle integrieren. D.h. Funktionen der Funksende-/Funkempfangsgeräte können unmittelbar über die Luftschnittstelle angesprochen und genutzt werden, ohne die Notwendigkeit komplexer Applikationen.

Projekte wie das Hexa-X legen nahe, dass 6G eine enge Integration von Lokalisierung und Sensorik mit Kommunikationsfunktionen aufweisen wird. Die in einem derartigen Umfeld eingesetzten Funksende-/Funkempfangsgeräte werden entsprechend als "Integrated Communications and Sensing"-, ICAS-Geräte bezeichnet.

Diese Funktionen werden nicht nur neue Anwendungsfälle ermöglichen, die eine extreme Lokalisierungsleistung erfordern, sondern auch ein Mittel zur Unterstützung und Verbesserung von Kommunikationsfunktionen darstellen.

WYMEERSCH, Henk, et al. Integration of communication and sensing in 6G: A joint industrial and academic perspective. In: 2021 IEEE 32nd Annual International Symposium on Personal, Indoor and Mobile Radio Communications (PIMRC). IEEE, 2021. S. 1-7. gibt einen Überblick über die Hexa-X-Vision und die geplanten Anwendungsfälle. Dort wird auch erörtert, wie die für diese Anwendungsfälle erforderliche Leistungslücke in Bezug auf 5G geschlossen werden kann. Hierzu werden mehrere verschiedene technische Voraussetzungen sowie die damit verbundenen Forschungsherausforderungen für die kommenden Jahre erörtert.

Eine konkrete Realisierung der Integration der Funktionen von Funksende-/Funkempfangseinrichtungen, insbesondere für die maschinellen Prozesse im industriellen Umfeld, ist dort nicht genannt bzw. offen gelassen.

Aus der US 2018/0049794 Al ist ein chirurgischer Roboterarm bekannt, der einen Antrieb mit Motoren enthält, um ein Endeffektor-Werkzeug zu steuern. Ein daran befestigtes Werkzeug erzeugt Ultraschall- und/oder Hochfrequenzenergie zur Gewebebehandlung. Das Werkzeug kann modulare Komponenten wie einen Schaft mit Ultraschallwandler, Speicher, drahtloser Schnittstelle und eigener Stromversorgung enthalten, die eine drahtlose Kommunikation mit dem Roboterarm ermöglicht. Das Werkzeug kann zwischen Roboterarmen ausgetauscht werden und enthält Sensoren zur Positionsbestimmung nach dem Abtrennen. Der modulare Schaft kann zwischen dem Roboterarm und einem manuell bedienbaren Griff gewechselt werden.

Die der Erfindung zugrundeliegende Aufgabe ist es den Nachteil des Standes der Technik zu überwinden und eine technische Lösung für eine Integration von Funktionen von Funksende-/Funkempfangseinrichtungen, insbesondere für maschinelle Prozesse im industriellen Umfeld, anzugeben.

Diese Aufgabe wird von der Einrichtung zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät gemäß dem Oberbegriff des Anspruchs 1, durch dessen kennzeichnende Merkmale, durch das Funksende-/Funkempfangsgerät gemäß dem Oberbegriff des Anspruchs 11, durch dessen kennzeichnende Merkmale, durch das System gemäß dem Oberbegriff des Anspruchs 12, durch dessen kennzeichnende Merkmale sowie durch das Verfahren zur Steuerung gemäß dem Oberbegriff des Anspruchs 13, durch dessen kennzeichnende Merkmale, gelöst.

Bei der erfindungsgemäßen Einrichtung zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät, welches mit zumindest einer zeitlich zumindest temporär zur Kommunikation, auf Funksende-/Funkempfang von elektromagnetischen Wellen basierenden Lokalisation und/oder Sensorik betreibbaren, gemäß zumindest einem Funkkommunikationsstandard drahtlos ausgestalteten, ersten Schnittstelle ausgestaltet ist, weist die Steuereinrichtung eine zweite Schnittstelle auf, über welche mindestens ein Steuersignal an das Funksende-/Funkempfangsgerät derart übermittelt werden kann, dass das erste Funksende-/Funkempfangsgerät durch Empfang und/oder Interpretation des Steuersignals zumindest zu einer zeitlich zumindest temporären Bereitstellung und/oder Abschaltung von zumindest Teile der Kommunikation, Lokalisation und/oder der Sensorik bereitstellenden ersten Schnittstelle derart konfigurierbar ausgestaltet ist, dass sie wahlweise zumindest zeitweise zur Kommunikation, Lokalisation und/oder Sensorik derart betrieben wird, dass der maschinelle Prozess unter Zugreifen auf zumindest die durch den Betrieb von der Funksende-/Funkempfangseinrichtung ausgetauschten Daten durchgeführt wird.

Einer der Vorteile der erfindungsgemäßen Steuereinrichtung liegt darin, dass Ressourcen eines oder mehrerer in einem System integrierbarer Funksende-/Funkempfangsgeräte optimal genutzt werden, da einzelne oder Kombinationen ihrer Funktionen bedarfsweise genutzt bzw. betrieben werden. Die Erfindung ermöglicht zudem, dass die Funksende-/Funkempfangsgeräte dies nahezu ohne großen Realisierungsaufwand bewerkstelligen können, da es lediglich der zweiten Schnittstelle und der erfindungsgemäßen Steuereinrichtung und der Durchführung des erfindungsgemäßen Verfahrens, bedarf, um dies zu erreichen. Es können also auch gängige Funksende-/Funkempfangsgeräte genutzt werden, sofern sie nach dem erfindungsgemäßen Verfahren, insbesondere eine ihrer Schnittstellen als zweite Schittstellen zur erfindungsgemäßen Steuereinrichtung, betrieben werden, so dass die Erfindung eine Nutzung von Funksende-/Funkempfangsgeräten in den eingangs genannten neuen Aufgabengebieten auf breiter Basis ermöglicht. Die erfindungsgemäße Steuereinrichtung ist, insbesondere wenn sie mehrere Funksende-/Funkempfangsgeräte steuert, vorteilhaft, da sie einzelne Funktionen für ein mehrere Funktionen benötigendes System verteilen und managen kann. Hierdurch sind viele Freiheitsgrade gegeben, beispielsweise was den Einsatzort des jeweiligen Funksende-/Funkempfangsgerätes oder dessen Zuordnung zu einem Netz, Arbeitsbereich oder Verbindung zu einer Künstlichen Intelligenz angeht.

Das erfindungsgemäße Funksende-/Funkempfangsgerät, eingerichtet zum Betrieb in einem industriellen Umfeld, ist derart ausgestaltet, dass es mit zumindest einer zeitlich zumindest temporär zur Kommunikation, auf Funksende-/Funkempfang von elektromagnetischen Wellen basierenden Lokalisation und/oder Sensorik betreibbaren, gemäß zumindest einem Funkkommunikationsstandard drahtlos ausgestalteten, ersten Schnittstelle ausgestaltet ist und eine der zweiten Schnittstelle, der erfindgungsgemäßen Steuereinrichtung entsprechende Schnittstelle aufweist, wobei das erste Funksende-/Funkempfangsgerät derart ausgestaltet und die der zweiten Schnittstelle entsprechende Schnittstelle derart funktional verbindbar und betreibbar ist, dass durch Empfang und/oder Interpretation eines der Steuersignale über die der zweiten Schnittstelle zu einer zeitlich zumindest temporären Bereitstellung und/oder Abschaltung von zumindest Teile der Kommunikation, Lokalisation und/oder zumindest Teile der Sensorik bereitstellenden ersten Schnittstelle derart konfigurierbar ausgestaltet ist, dass es wahlweise zumindest zeitweise zur Kommunikation, Lokalisation und/oder Sensorik betrieben wird.

Neben den im Zusammenhang mit der erfindungsgemäßen Steuereinrichtung genannten Vorteilen werden diese Vorteile mutatis mutandis auch durch das erfindungsgemäße Funksende-/Funkempfangsgerät erreicht, da es zur Interaktion mit der Steuereinrichtung und damit zur Durchführung des erfindungsgemäßen Verfahrens eingerichtet ist, so dass es somit zur Verwirklichung der genannten Vorteile beiträgt.

Das erfindungsgemäße System zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät, ist gekennzeichnet durch zumindest eine erfindungsgemäße Steuereinrichtung und zumindest ein erfindungsgemäßes Funksende-/Funkempfangsgerät als erstes Funksende-/Funkempfangsgerät.

Die bisher genannten Vorteile gelten mutatis mutandis besonders auch für das erfindungsgemäße System, da dies durch die Steuereinrichtung und mindestens ein erfindungsgemäßes Funksende-/Funkempfangsgerät gebildet ist. Ferner ist damit eine minimale, das erfindungsgemäße Verfahren durchführende, Anordnung gegeben, welche nicht nur die oben genannten Vorteile hinsichtlich optimaler Nutzung der Ressourcen bringt, sondern auch flexible konfigurierbare Funktionen für über die reine Kommunikation hinausgehende technische Aufgaben bereitstellt.

Das erfindungsgemäße Verfahren zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät, ist gekennzeichnet durch zumindest eine erfindungsgemäße Steuereinrichtung und/oder Weiterbildung der erfindungsgemäßen Steuereinrichtung, sowie zumindest ein erfindungsgemäßes Funksende-/Funkempfangsgerät, die derart funktional verbunden und betrieben werden, dass die Steuereinrichtung zumindest Teile der Funktionen des Funksende-/Funkempfangsgeräts über die zweite Schnittstelle steuert, wobei die Steuerung derart erfolgt, dass die Integration, insbesondere der maschinelle Prozess, zumindest unter Nutzung des Kommunikations-, Lokalisations- und/oder Sensorikbetriebs des Funksende-/Funkempfangsgeräts zumindest zeitweise durchgeführt wird.

Durch das erfindungsgemäße Verfahren werden die Vorteile in den zuvor genannten gegenständlichen Erfindungen mutatis mutandis erzielt, da mit der Durchführung des erfindungsgemäßen Verfahrens die Vorteile bei der Nutzung der gegenständlichen Erfindungen verwirklicht werden können.

Weitere vorteilhafte Ausgestaltungen und Weiterbildungen der Erfindung sind durch die Unteransprüche angegeben.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Funksende-/Funkempfangsgerät" möglichst breit ausgelegt werden, um insbesondere alle elektronischen Geräte mit Datenverarbeitungseigenschaften und gemäß höheren Mobilfunkkommunikationsstandards, wie beispielsweise der 6. Generation und höher bzw. Derivaten, abzudecken. Funksende-/Funkempfangsgeräte können somit beispielsweise Personal Computer, Server, speicherprogrammierbare Steuerungen (SPS), Handheld-Computer-Systeme, Pocket-PC-Geräte, Mobilfunkgeräte und andere Maschinenteile, die rechnergestützt Daten verarbeiten und gemäß dem Mobilfunkstandard übermitteln können, Prozessoren und andere elektronische Geräte zur drahtlosen Datenübermittlung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger sowie eine Kombination aus einem oder mehreren dieser Elemente zur Bildung einer so genannten Cloud verstanden werden.

Unter einem "Modul" kann im Zusammenhang mit der Erfindung beispielsweise mindestens ein Prozessor und/oder mindestens eine Speichereinheit zum Speichern von Programmbefehlen verstanden werden, welche physisch an einem Ort, beispielsweise einem Teil einer Leiterplatte, oder auch auf mehreren Entitäten eines Netzwerks verteilt funktional zusammenwirkend verbunden sind. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder realisieren.

Ein digitaler Zwilling ist insbesondere dazu eingerichtet, ein technisches, chemisches und/oder physikalisches Verhalten von zumindest Teilen des Systems oder Produkten des Systems, abzubilden bzw. zu modellieren und damit als Parameter verfügbar zu machen.

Unter einem "Parameter" kann insbesondere eine Einheit wie beispielsweise Physikalische Eigenschaft, Name, Größe, Farbe, Typ, Zustand, Parameter eines Einsatzortes usw., oder ein Merkmal, eine Charakteristik und/oder eine Konfiguration beteiligter Entitäten, wie dem E-AI-System, oder ein Produkt verstanden werden.

Unter einem "E-AI-System" kann insbesondere eine Maschine, wie z.B. eine Werkzeugmaschine oder ein Roboter, ein Gerät, wie z.B. ein Feldgerät, eine industrielle Anlage, wie z.B. eine Produktionsanlage, mit eingebetteter künstlicher Intelligenz verstanden werden.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Gemäß einer Weiterbildung der erfindungsgemäßen Steuereinrichtung weist diese eine dritte zur drahtgebundenen Kommunikation ausgestaltete Schnittstelle auf, die derart ausgestaltet ist, dass die Steuereinrichtung mit einer mindestens die zweite Schnittstelle aufweisenden Einrichtung, insbesondere einem ersten Funksende-/Funkempfangsgerät, zumindest lösbar befestigt ist.

Durch eine derartige Schnittstelle wird die Steuereinrichtung also als Teil einer, einer anderen, insbesondere System-, Aufgabe lösenden Einrichtung, wie das Funksende-/Funkempfangsgerät selbst oder als Teil einer, insbesondere Kommunikations-, Infrastruktur ausgebildeten Einrichtung, temporär, beispielsweise steckbar, oder dauerhaft, beispielsweise als Teil der Schaltung und/oder im selben Gehäuse, integriert. Insbesondere kann dies derart implementiert sein, dass ein Prozessor der Einrichtung, insbesondere des Funksende-/Funkempfangsgeräts, die Steuerung sowohl der erfindungsgemäßen Steuereinrichtung als auch die Betriebsteuerung der Einrichtung, beispielsweise des Funksende-/Funkempfangsgeräts, realisiert. Beispielsweise könnten also Funksende-/Funkempfangsgeräte baugleich sein und das erfindungsgemäße Verfahren derart weitergebildet sein, dass es den beteiligten Prozessoren unterschiedliche Aufgaben zuweist.

Der Vorteil einer derartigen Lösung läge unter anderem darin, dass für die Realisierung der erfindungsgemäßen Steuereinrichtung auch ein Funksende-/Funkempfangsgerät genutzt werden könnte, so dass es keiner separat herzustellenden Einrichtung bedarf. Zudem bestünde eine Flexibilität dahingehend, dass sich gemäß einer Weiterbildung des erfindungsgemäßen Verfahrens entsprechend mehrere Funksende-/Funkempfangsgeräte selbst als System organisieren könnten.

Hierzu kann die erfindungsgemäße Steuereinrichtung derart weitergebildet sein, dass die zweite Schnittstelle zur drahtgebundenen Kommunikation derart ausgestaltet ist, dass sie zusätzlich als dritte Schnittstelle betreibbar ist. Durch diese Weiterbildung reduzieren sich zweite und dritte Schnittstelle zu einer die Integration der Steuereinrichtung realisierenden Schnittstelle. Dies wird vorteilhaft sein, wenn in die Steuereinrichtung ausschließlich eine einzige Funksende-/Funkempfangseinrichtung integriert wird und lediglich diese steuert und/oder über diese drahtlose Schnittstelle die Anbindung an mehrere Funksende-/Funkempfangsgeräte ermöglicht ist, wie es beispielsweise bei einem, insbesondere industriellen, Bus-System gegeben ist.

Alternativ oder ergänzend kann die erfindungsgemäße Steuereinrichtung derart weitergebildet sein, dass über die erste, zweite und/oder dritte Schnittstelle eine Kommunikationsverbindung derart bereitstellbar ist, dass sie zumindest temporär zum kooperativen Ausführen von zumindest Teilen von Funktionen eines, insbesondere im industriellen Umfeld betreibbaren, Systems ausgestaltet ist.

Gemäß einer weiteren Weiterbildung der erfindungsgemäßen Steuereinrichtung, weist diese eine, insbesondere durch Nutzung der ersten, zweiten oder dritten Schnittstelle ausgebildete, vierte, zur Interaktion mit einem so genannten "Embodied Artificial Intelligence", E-AI-, System zur Beeinflussung mindestens einer physikalischen Größe, insbesondere im industriellen Umfeld, ausgestaltete, Schnittstelle auf.

Hierdurch stehen dem System vielfältige, insbesondere durch Daten einer künstlichen Intelligenz gegebene, Möglichkeiten der Steuerung durch künstliche Intelligenz, insbesondere auch im Zusammenhang mit Digitalen Zwillingen des Systems, zur Verfügung, die unmittelbar Veränderungen des realen Umfelds bewirken bzw. antizipieren können. Alternativ oder ergänzend können die bei der Ausübung erfindungsgemäß koordinierter Abläufe anfallenden Daten für ein maschinelles Lernen zur Verfügung gestellt werden, so dass diese das jeweilige E-AI System für einen zukünftigen Eingriff in die reale, also physikalischen Gesetzmäßigkeiten unterworfenen, Welt optimieren können.

Wird die erfindungsgemäße Steuereinrichtung derart weitergebildet, dass das E-AI-System zumindest durch Maschinen, wie beispielsweise Roboterarme, so genannte "Computer Numerical Control"-, CNC-Maschinen, autonome Fahrzeuge, insbesondere stationäre und/oder mobile Roboter und/oder vergleichbare steuerbare industriell einsetzbare Einrichtungen gebildet wird, trägt die Erfindung zu vielfältigen Anwendungen in der Industrie vorteilhaft bei, indem sie den Funksende-/Funkempfangsgeräten mit gemäß Mobilfunkstandard der sechsten und/oder höheren Generation bzw. deren Derivaten verfügbaren Funktionalitäten Maschinen zugänglich machen bzw. als Teil der Maschinen fungieren können.

Die erfindungsgemäße Steuereinrichtung kann des Weiteren derart weitergebildet werden, dass sie ein erstes Modul zur Erfassung ein oder mehrerer Parameter und/oder ein oder mehrere Status, insbesondere
a) einen, beispielsweise durch Abfrage zumindest eines Parameters eines im E-AI-System integrierten und/oder funktional zumindest temporär verbindbaren Digitalen Zwillings des E-AI-Systems ermittelbaren Zustand des E-AI-Systems,
b) eine aktuell vom E-AI-System ausgeführte Aufgabe, und/oder zu der Aufgabe zugehörige Historie, insbesondere vom E-AI-System während früherer Ausführungen der Aufgabe gesammelte Parameter und/oder Trainingsdaten,
c) einen Kontext des E-AI-Systems, beispielsweise der physischen Umgebung zumindest eines Teils des E-AI-Systems und/oder benachbarter E-AI-Systeme physisch erfassbarer erster Werte, wie beispielsweise den Standort benachbarter E-AI-Systeme, oder, durch einen Parameter des jeweiligen Digitalen Zwillings, repräsentierte Werte, wie physikalische Größen
d) die aktuellen Parameter und Fähigkeiten aller ICAS-Geräte, des Systems aufweist.

Hierdurch ist die erfindungsgemäße Steuereinrichtung in der Lage die benötigten und/oder betriebenen Funktionen dynamisch an auftretende Veränderungen des Systems anzupassen, insbesondere dies durch Einsatz von künstlicher Intelligenz, beispielsweise auf Maschinellem Lernen beruhend, diese Veränderungen und/oder deren Auswirkungen zu antizipieren.

Alternativ oder ergänzend kann die erfindungsgemäße Steuereinrichtung, um diesen Vorteil des dynamischen Anpassens zu realisieren, derart weitergebildet werden, dass das erste Modul mit einer fünften Schnittstelle derart funktional verbindbar und betreibbar ist, dass die Erfassung eines Parameters oder mehrerer Parameter und/oder eines oder mehrerer Status des Systems durch Zugriff des ersten Moduls über die fünfte Schnittstelle strukturiert in einer, insbesondere über die fünfte Schnittstelle verbundenen Datenbank strukturiert über die fünfte Schnittstelle abrufbare, durch ein ein Maschinelles Lernmodell implementierendes zweites Modul aktuelle Zustände des Systems und/oder Teile davon repräsentierender, und/oder strukturiert über, einen semantischen Graphen repräsentierender, abgespeicherter Daten und der Auswertung der Daten erfolgt.

Der genannte Vorteil kann wiederum weiter unterstützt, werden, wenn alternativ oder ergänzend die Steuereinrichtung derart weitergebildet wird, dass sie ein drittes Modul aufweist, das zur Durchführung der Erfassung, insbesondere zum Auslesen des ersten Wertes und/oder zweiten Wertes über eine Schnittstelle dient. Diese Informationen können z.B. über eine Schnittstelle zum Auslesen von Parametern aus einer Menge von in einer Datenbank hinterlegten Parametern, oder als Parameter eines maschinellen Lernmodells dargestellt oder mit einem semantischen Graphen beschrieben werden.

Das erfindungsgemäße Verfahren kann derart vorteilhaft weitergebildet werden, dass die Steuereinrichtung eine Vielzahl von ersten Funksende-/Funkempfangsgeräten steuert.

Hierdurch lassen sich beispielsweise unterschiedliche Aufgaben in einem System, beispielsweise nach Parametern ausgewählt, verteilen, wobei Parameter beispielsweise eine Priorisierung von Funksende-/Funkempfangsgeräten berücksichtigen, insbesondere hinsichtlich bestimmter ihrer Funktionen oder der, insbesondere optimierten, Auslastung ihrer Ressourcen und/oder von anderen sich ändernden oder konstanten Bedingungen, wiedergebenden Größen, wie ein Maß der örtlichen Nähe oder relative Ausrichtung/Position zum Einsatzort und/oder determiniertes Objekt. Es bieten sich also durch diese Weiterbildung Orchestrierungsmöglichkeiten unterschiedlichster Art an.

Solche Vorteile bzw. eine weitere Orchestrierungsmöglichkeit ist geboten, wenn das erfindungsgemäße Verfahren derart weitergebildet wird, dass zumindest zwei erste Funksende-/Funkempfangsgeräte durch die Steuereinrichtung derart gesteuert werden, dass sie zumindest zeitweise, insbesondere als Teil eines, beispielsweise in der Art des Mesh, gebildeten Netzwerks, eine Kommunikationsverbindung halten, wobei sie in dieser Zeit ein Radar in der Art des so genannten "Multiple Input Multiple Output" MIMO-Array bilden.

Ein solches Netzwerk ist nicht nur eine weitere Option zur Orchestrierung, insbesondere in einem System, sondern bietet auch eine zusätzliche bzw. verbesserte Funktion, die auch über mehrere E-AI-Systeme verteilt wirken bzw. geboten werden kann.

Alternativ oder ergänzend kann das erfindungsgemäße Verfahren dabei derart weitergebildet werden, dass zumindest eines der Vielzahl von ersten Funksende-/Funkempfangsgeräten durch die Steuereinrichtung zum Empfang von Signalen derart gesteuert wird, dass aufgrund der empfangenen Signale eine Lokalisation, insbesondere der eigenen Position, durchgeführt wird.

Diese Weiterbildung stellt eine der Möglichkeiten der Erfindung dar, eine Lokalisation durch Funksende-/Funkempfangsgeräten durchzuführen.

Bei einer weiteren alternativen oder ergänzenden Weiterbildung des erfindungsgemäßen Verfahrens wird zumindest eines der Vielzahl von ersten Funksende-/Funkempfangsgeräten durch die Steuereinrichtung derart gesteuert, dass dieses als Sensor zumindest zeitweise mindestens einen Wert zumindest einer physikalische Größe erfasst.

Hierdurch wird eine der vielfältigen Möglichkeiten der Erfindung zur Durchführung einer Sensorikaufgabe bereitgestellt. Insbesondere im System steht dadurch eine Funktion zur Verfügung, die, ebenso wie die zuvor genannten Weiterbildungen, vor allem in maschinellen Prozessen, vorteilhaft eingesetzt und durch das erfindungsgemäße Verfahren orchestriert werden kann.

Im Folgenden werden Ausführungsbeispiele der Erfindung anhand von Figuren 1 bis 4 näher erläutert. In den Figuren 1 bis 4 sind gleiche oder funktionsgleiche Elemente mit denselben Bezugszeichen versehen, sofern nichts anderes angegeben ist. Es zeigen:
- Fig. 1: schematisch ein Ausführungsbeispiel des erfindungsgemäßen Funksende-/Funkempfangsgerätes,
- Fig. 2: schematisch ein Ausführungsbeispiel der erfindungsgemäßen Steuereinrichtung,
- Fig. 3: schematisch ein Ausführungsbeispiel des erfindungsgemäßen Systems als Bestandteil eines E-AI-Systems,
- Fig. 4: schematisch ein Auführungsbeispiel des erfindungsgemäßen Verfahrens, in Anwendung bei dem Ausführungsbeispiel des erfindungsgemäßen Systems, integriert in einem E-AI-System.

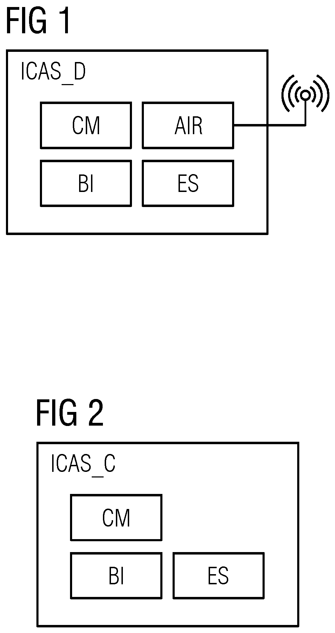

Bei den im Folgenden in den Figuren 1 bis 4 erläuterten Ausführungsbeispielen handelt es sich um bevorzugte Ausführungsformen und Weiterbildungen der Erfindung.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer ei-genständigen Offenbarung in der Beschreibung nicht bedarf.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung. Sie bezeichnen also diesselben und/oder die gleiche Funktion bereitstellende Einheiten.

Figur 1 zeigt schematisch den Aufbau eines erfindungsgemäßen, auch als so genanntes ICAS-Device bezeichneten, Funksende-/Funkempfangsgerätes ICAS_D.

Zu erkennen ist eine grobe Aufteilung in Funktionsblöcke des Funksende-/Funkempfangsgerätes ICAS_D.

Zum einen weist das Funksende-/Funkempfangsgerät ICAS_D einen Funktionsblock auf, der für den Betrieb und die Steuerung der Funktionen des Funksende-/Funkempfangsgerätes ICAS_D erforderlichen Rechner- und Speichereinrichtung benötigt wird, welcher auch als "Compute & Memory" Block bezeichnet werden kann. Dies können ein oder mehrere überwiegend integrierte Schaltelemente, insbesondere ein oder mehrere Prozessor- und Speicherchip sein.

Ferner ist für den Betrieb des Funksende-/Funkempfangsgerätes ICAS_D ein Funktionsblock für die Energieversorgung ES ("Energy Source") vorgesehen. Dieser kann als eine Batterie bzw. Akku, Netzversorgung und/oder vergleichbare Versorgung, wie beispielsweise als die so genannte "Power over Ethernet"-Versorgung ausgestaltet sein.

Ferner ist ein Funktionsblock zu erkennen, der den für ein Funksende-/Funkempfangsgerät ebenso essentiellen Funktionsblock der Luftschnittstelle AIR ("Air Interface") realisiert.

Die Luftschnittstelle AIR wird dabei typischerweise analoge und/oder digitale, auch als so genannte "Radio Frequency Components" bezeichnete, Komponenten der Funkübertragung sowie die für eine derartige Übertragung notwendigen Abstrahlvorrichtungen, also im Wesentlichen ein oder mehrere Antennen, aufweisen.

Diese derartig ausgestaltete Luftschnittstelle AIR kann dabei derart weitergebildet sein, dass sie ein oder mehrere Standards zur Drahtlos- bzw. Funkkommunikation erfüllt, also eine Kommunikation über verschiedene Wege möglich macht, dies kann auch über ein oder mehrere Frequenzbänder erfolgen. Gemein ist dieser ersten Schnittstelle AIR des Gerätes, dass eine bi- oder unidirektionale Übertragung von Signalen, insbesondere Daten, gemäß ein oder mehreren Standards über Senden und/oder Empfangen von elektromagnetischen Wellen realisiert wird. Hierunter können erfindungsgemäß auch neben den Funk- und Radiowellen Anwendungen, auch Radaranwendungen und/oder Spektographieanwendungen oder Vergleichbares, verstanden werden.

Das dargestelle Funksende-/Funkempfangsgerät ICAS_D ist somit mit dieser ersten Schnittstelle AIR in der Lage Wellenformen für verschiedene Zwecke zu senden und zu empfangen, nämlich zur
- Kommunikation
- Lokalisierung
- Erkennung, beispielsweise unter Nutzung von Radar oder Spektrografie.

Neben der Kommunikation sind also auch Sensorfähigkeiten realisierbar. Daher wird das Funksende-/Funkempfangsgerät ICAS_D gemäß dem Ausführungsbeispiel der Erfindung auch als ein so genanntes "Integrated Communication And Sensing Device"-, ICAS-, Gerät bezeichnet.

Das Funksende-/Funkempfangsgerät ICAS_D weist also über die Kommunikation hinausgehende Funktionen auf, von denen erwartet wird, dass sie in 6G-Kommunikationssystemen und weiteren vergleichbaren über 5G hinausgehenden Kommunikationssystemen und/oder nachfolgenden Kommunikationsstandards gegeben sind und, insbesondere maschinelle, insbesondere im industriellen Umfeld durchgeführte, Prozesse unterstützende Anwendungen genutzt werden können.

Hierzu weist das Ausführungsbeispiel des erfindungsgemäßen Funksende-/Funkempfangsgerätes ICAS_D einen weiteren Funktionsblock auf, der als die erfindungsgemäße zweite Schnittstelle eine Rückkopplungsschnittstelle BI ("Backhaul Interface") realisiert.

Diese zweite Schnittstelle BI kann über eine drahtlose Luftschnittstelle oder eine drahtgebundene Schnittstelle mit einer erfindungsgemäßen Steuereinrichtung, beispielsweise die in Figur 2 gezeigte Ausführungsform der Steuereinrichtung ICAS_C, zur Kommunikation verbunden sein, sodass das erfindungsgemäße Funksende-/Funkempfangsgerät ICAS_D über diese zweite Schnittstelle BI Daten empfangen kann, die zu einer Steuerung einzelner, mehrerer oder aller Funktionen des Funksende-/Funkempfangsgeräts ICAS_D führen und/oder Daten senden, die von einzelnen, mehreren oder allen Funktionen zur Verfügung gestellt werden und über diese zweite als Rückkopplungsschnittstelle BI verfügbare Kommunikationsverbindung für oben genannte Anwendungen, insbesondere maschinelle, im industriellen Umfeld durchgeführte, Prozesse weitergeleitet und/oder genutzt werden.

Diese erfindungsgemäße Rückkopplungsschnittstelle BI ermöglicht also als Ausführungsbeispiel des erfindungsgemäßen Verfahrens eine Steuerung der Funktionen des Funksende-/Funkempfangsgeräts ICAS_D von externer Seite, sodass das Funksende-/ Funkempfangsgerät ICAS_D weitestgehend ohne Anpassungen flexibel für derartige Prozesse genutzt werden kann und Funktionen einzeln oder gemeinsam hierzu zu Zustandsänderungen, beispielsweise aktiviert und/oder deaktiviert und/oder auf Zustände des Prozesses und/oder Kommandos reagierend, führen und Parameter einzelner, mehrerer oder aller Funktionen angepasst werden.

Gemäß einer weiteren Ausgestaltungsvariante der Erfindung, kann auch vorgesehen sein, dass die Rückkopplungsschnittstelle BI, wenn sie zumindest teilweise drahtlos ausgestaltet ist, dies durch Teile der ersten Schnittstelle AIR realisiert ist, die Rückkopplung gemäß dem erfindungsgemäßen Verfahren zur Steuerung also zumindest teilweise über die erste Schnittstelle AIR erfolgt. Eine weitere Ausgestaltung der Erfindung ist gegeben, wenn die erste Schnittstelle AIR alternativ oder ergänzend zur zweiten Schnittstelle BI die erfindungsgemäße Rückmeldung bereitstellt, beispielsweise um das Gerät ICAS_D mit der Felxibilität auszustatten, um sowohl drahtlos über die erste Schnittstelle AIR, als auch drahtgebunden über die zweite Schnittstelle mit der Steuereinrichtung ICAS_C verbindbar zu sein.

Die Vorteile des erfindungsgemäßen Steuerns über Steuereinrichtung gemäß erfindungsgemäßem Verfahren entfalten noch mehr Vorteile, weil sie ermöglichen, dass eine Reihe solcher ICAS-Geräte in ein größeres System integriert werden können, wie beispielsweise ein fahrerloses Transportsystem (FTS) oder ein Fabrikroboter. Mit der Erfindung wird für solche Cluster von ICAS-Geräten mittels der erfindungsgemäßen Rückkopplungsschnittstelle BI und der erfindungsgemäßen Steuereinheit, die gemäß erfindungsgemäßem Verfahren das von Geräten, wie dem erfindungsgemäßen Funksende-/Funkempfangsgerät ICAS_D, gebildeten Cluster eine Managementeinheit bereitgestellt.

Dies bietet unter anderem den Vorteil, dass diese Einrichtung
- den Betrieb des ICAS-Clusters überwacht
- den ICAS-Geräten dynamisch Aufgaben zuweisen kann, also beispielsweise die Dauer und die Art der Funktion(en), die es bereitstellen soll.

Weitere Details zur Steuereinrichtung werden anhand des Ausführungsbeispiels der erfindungsgemäßen Steuereinrichtung ICAS_C ("Controller") deutlich, welches schematisch in Figur 2 dargestellt ist.

Dabei handelt es sich um eine Einrichtung, die gemäß einem Ausführungsbeispiel des erfindungsgemäßen Verfahrens Parameter bzw. durch diese die Konfiguration einer Reihe von erfindungsgemäßen ICAS-Geräten, die beispielsweise wie das in Figur 1 beschriebene ICAS Gerät ICAS_D ausgestaltet sind, verwalten kann.

In Figur 2 ist ebenfalls eine grobe Aufteilung in Funktionsblöcke als schematische Darstellung eines Ausführungsbeispiels der erfindungsgemäßen Steuereinrichtung ICAS_C zu erkennen.

Zum einen weist das Ausführungsbeispiel der erfindungsgemäßen Steuereinrichtung ICAS_C ebenfalls einen Funktionsblock auf, die für den Betrieb und die Steuerung der Funktionen des Ausführungsbeispiels der erfindungsgemäßen Steuereinrichtung ICAS_C erforderliche Rechner- und Speichereinrichtung CM. Dies können ebenso ein oder mehrere überwiegend integrierte Schaltelemente, insbesondere ein oder mehrere Prozessor- und Speicherchip sein.

Ferner ist für den Betrieb des Ausführungsbeispiels der erfindungsgemäßen Steuereinrichtung ICAS_C auch ein Funktionsblock für die Energieversorung ES vorgesehen. Das kann auch als eine Batterie bzw. Akku, Netzversorgung und/oder vergleichbare Versorgung wie beispielsweise als die so genannte "Power over Ethernet" Versorgung ausgestaltet sein.

Im Gegensatz zum Ausführungsbeispiel des erfindungsgemäßen Funksende-/Funkempfangsgerätes ICAS_D weist das Ausführungsbeispiel der erfindungsgemäßen Steuereinrichtung ICAS_C keine Luftschnittstelle AIR auf, sondern lediglich die zur Schnittstelle zur Rückkopplung BI des Ausführungsbeispiels des erfindungsgemäßen Funksende-/Funkempfangsgerätes ICAS_D entsprechende, und somit gleich bezeichnete, Schnittstelle BI, die gemäß dem Ausführungsbeispiel als drahtgebundene Schnittstelle ausgebildet ist, beispielsweise eine Schnittstelle, die eine Kommunikation über ein, insbesondere gemäß einem industriellen Standard ausgestaltetes und betriebenes, Bussystem ermöglicht.

Hierauf ist die erfindungsgemäße Steuereinrichtung aber nicht beschränkt. Die Steuereinrichtung ICAS_C kann auch derart ausgestaltet sein, dass es eine erste Luftschnittstelle AIR und/oder drahtgebundene zweite Schnittstelle BI alternativ oder ergänzend zu der drahtgebundenen Schnittstelle BI aufweist und hierüber die erfindungsgemäße Rückkopplung zumindest teilweise realisiert wird.

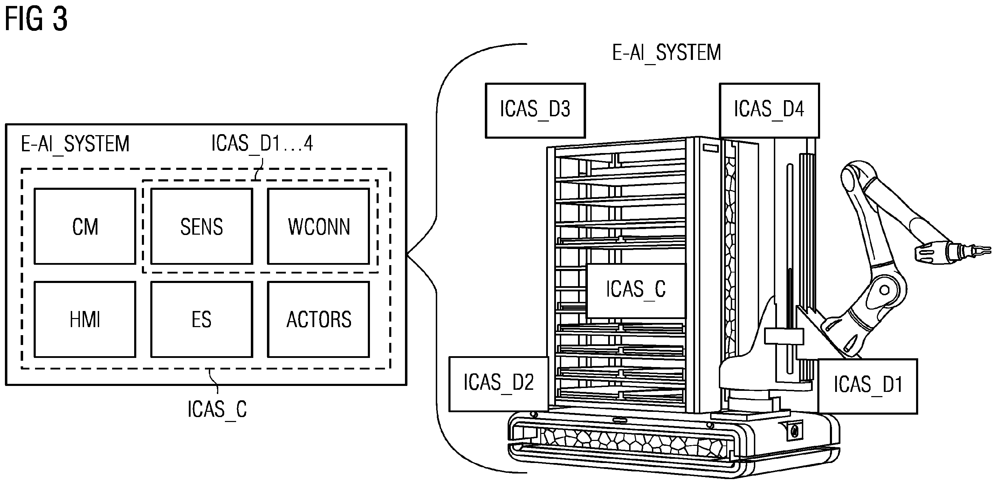

Die Figur 3 zeigt schematisch ein Ausführungsbeispiel des erfindungsgemäßen Systems als Bestandteil eines E-AI-Systems, das beispielsweise auf Grundlage des Ausführungsbeispiels der erfindungsgemäßen Steuereinrichtung ICAS-C und mehrerer ICAS-Geräte ICAS_D1...4, die gemäß Ausführungsbeispiel des erfindungsgemäßen Funksende-/Funkempfangsgerätes ICAS_D, als Ausführungsbeispiel des erfindungsgemäßen Systems gebildet sind, in ein Embodied AI E-AI_SYSTEM integriert.

Zu erkennen ist zum einen eine schematische Darstellung der Funktionseinheiten eines solchen Embodied AT Systems E-AI_SYSTEM und zum anderen eine Illustration des das erfindungsgemäße System integrierenden E-AI-Systems E-AI_SYSTEM als mögliche industrielle Applikation in einem Intelligenten Roboter-Assistent, welcher mobil und mit mehreren Sensoren, versehen ist.

Dabei ist schematisch dargestellt, dass die Sensoren des Roboters durch erfindungsgemäß ausgestaltete Funksende-/Funkempfangsgeräte ICAS_D1...4 gebildet werden, die zur Durchführung des erfindungsgemäßen Verfahrens mit einer erfindungsgemäßen Steuereinrichtung ICAS_C verbunden sind.

Die Verbindung ist nicht dargestellt. Sie kann teilweise durch ein drahtgebundenes, im Roboter integriertes Bussystem, ermöglicht sein, und/oder ganz oder teilweise durch die in den Funksende-/Funkempfangsgeräten ICAS _D1...4 vorhandene erste Luftschnittstelle AIR oder die zweite Schnittstelle BI, sofern sie zumindest teilweise zur drahtlosen Kommunikation ausgerichtet sind, gebildet werden. Denkbar ist auch, dass die erfindungsgemäße Steuereinrichtung ICAS_C über die drahtgebundene Rückkopplungsschnittstelle BI, hier also das Bus-System, eine oder mehrere der ICAS-Geräte ICAS_D1...4 so konfiguriert, dass die Steuereinrichtung ICAS_C eine oder mehrere der Luftschnittstellen AIR der Funksende-/Funkempfangsgeräte ICAS_D1...4 als Rückkopplungsverbindung zu rein drahtlos kommunizierenden ICAS-Geräten ICAS_D1...4 konfiguriert und zumindest zeitweise so nutzt.

Die schematische Darstellung des in dieser Illustration einer industriellen Anwendung integrierten Ausführungsbeispiels des erfindungsgemäßen Systems zeigt vereinfacht die grundsätzlichen Elemente eines die Erfindung integrierenden E-AI-Systems E-AI_SYSTEM.

Zu erkennen ist, dass ein derartiges System E-AI_SYSTEM ebenfalls wieder einen Funktionsblock aufweist, der eine für den Betrieb und die Steuerung der Funktionen des E-AI-Systems E-AI_SYSTEM erforderliche Rechner- und Speichereinrichtung CM aufweist. Dies können wiederum ein oder mehrere überwiegend integrierte Schaltelemente, insbesondere ein oder mehrere Prozessor- und Speicherchip sein. Sie können on-board, aber auch ganz oder teilweise ortsdisjunkt gelagert und drahtgebunden oder drahtlos mit den restlichen Funktionseinheiten verbunden sein. Beispielsweise können sowohl Teile der Steuerung als Ganzes oder verteilt auf mehrere Entitäten, beispielsweise verteilten Rechnereinrichtungen, ausgelagert sein und/oder Teile des Speichers ortsdisjunkt bzw. ortsfern als Ganzes oder verteilt auf mehrere Entitäten, beispielsweise einer Cloud, realisiert sein.

Ferner ist für den Betrieb auch ein Funktionsblock für die Energieversorung ES vorgesehen. Das kann wiederum als eine Batterie bzw. Akku, Netzversorgung und/oder vergleichbare Versorgung, wie beispielsweise als die so genannte "Power o-ver Ethernet" Versorgung, ausgestaltet sein.

Zusätzlich wird ein derartiges E-AI-System E-AI-SYSTEM über eine oder mehrere Mensch-Maschine-Schnittstellen HMI verfügen, die eine Interaktion zwischen Mensch und Maschine ermöglichen, beispielsweise Tastatur, Display, Audio-, Videoausgabe, virtual bzw. augmented Reality, Headsets oder Vergleichbares.

Hinzu kommt ein Funktionsblock, der aus einem oder mehreren Aktoren ACTORS besteht, die für die Manipulation physikalischer Parameter, also die Wirkung des E-AI-Systems E-AI-SYSTEM auf die reale Welt, verantwortlich sind, d.h**.** Handlungen mit und/oder ohne physischen Auswirkungen bewirken. Mit Blick auf den illustrierten Roboter könnten dies also beispielsweise (Mikro-)Motoren zur Bewegung von Greifarmen und - fingern oder Motoren zur Bewegung des ganzen Roboters an andere Orte sein. Möglich ist aber sowohl für den Roboter als auch generell bei Maschinen jede denkbare Funktion innerhalb eines maschinengestützten Prozesses.

Des Weiteren sind zwei Funktionsblöcke zu erkennen, die in einem E-AI-System im Zusammenhang mit Funksende-/Funkempfangsgeräten ICAS_D1...4, die nach Standards der 6. Generation und höher bzw. deren Derivaten ausgestaltet sind, zu erwarten sind: Sensoren SENS und auf elektromagnetischen Wellen, also insbesondere Funkwellen, basierende drahtlose Konnektivitäten WCONN.

Im Zusammenhang mit Funksende-/Funkempfangsgeräten ICAS _D1...4 bedeutet dies, dass die ICAS-Geräte ICAS D1...4 ganz oder teilweise die Sensorfunktionalität und/oder Drahtlosverbindung eines E-AI-Systems E-AI_SYSTEM bilden können. Dies soll in der Figur 3 durch die Einfassung der Funktionsblöcke SENS, WCOMM zu einer durch alle ICAS Geräte ICAS_D1...4 gebildeten als solche bezeichnete erste Funktionsgruppe dargestellt werden.

Damit diese erfindungsgemäßen ICAS Geräte ICAS _D1...4 das erfindungsgemäße Verfahren umsetzen, weisen diese ICAS Geräte ICAS_D1...4 alle eine Rückkopplungsverbindung BI zu der erfindungsgemäßen Steuereinrichtung ICAS_C auf. Da die Steuereinrichtung ICAS_C gemäß Vorgaben des E-AI-Systems E-AI-SYSTEM arbeitet, wird es in irgendeiner dem Fachmann zugänglichen Form auch von dem System E-AI_SYSTEM diese Vorgaben laufend, beispielsweise über eine Kommunikationsverbindung, und/oder zu mindestens einem diskreten Zeitpunkt, beispielsweise durch Aufnahme gespeicherter Computerprogrammprodukte und/oder -Daten, erhalten. Grundsätzlich können also einzelne oder alle Funktionsblöcke des E-AI-Systems E-AI_SYSTEM, inklusive der erfindungsgemäßen IACS-Geräte ICAS_C, dazu beitragen. Daher sind alle Funktionsblöcke zu einer zweiten Funktionsgruppe ICAS_C zusammengefasst.

Die Erfindung ist nicht auf die Integration in ein E-AI-System E-AI-SYSTEM beschränkt, vielmehr kann durch die Erfindung über mehrere E-AI-Systeme hinweg Kommunikation und Abstimmung zur Konfiguration von erfindungsgemäßen ICAS-Geräten ICAS_D erreicht werden. Dazu kann vorgesehen sein mehr als eine erfindungsgemäße Steuerreinrichtung ICAS_C zu verwenden, auch können einzelne bis hin zu allen ICAS-Geräte ICA _D1...4 über E-AI-System E-AI-SYSTEM Grenzen hinweg eingesetzt werden, beispielsweie bedarfweise zu Funktionsclustern zusammengeschaltet, d.h. gemeinsam durch ein oder mehrere erfindungsgemäße Steuereinrichtungen ICAS_C gesteuert/konfiguriert werden.

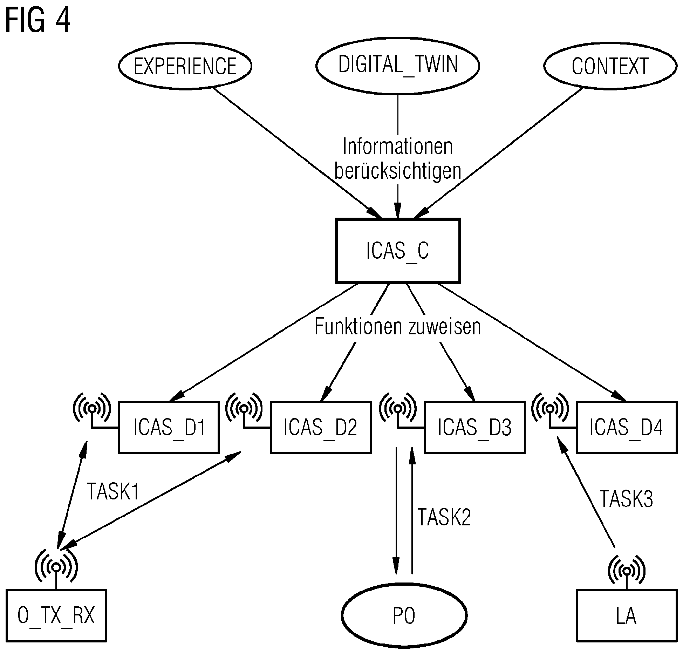

In Figur 4 ist schematisch ein Ausführungsbeispiel des erfindungsgemäßen Verfahrens angewandt bei dem Ausführungsbeispiel des erfindungsgemäßen Systems, welches in einem E-AI-System integriert ist, dargestellt, anhand dessen weitere Einzelheiten des erfindungsgemäßen Verfahrens und seiner Ausgestaltungen und/oder Weiterbildungen sowie weitere Anordnungsmerkmale erfindungsgemäßer Entitäten aufgezeigt werden.

Hierzu sei die in Figur 3 illustrierte Integration des erfindungsgemäßen Verfahrens in einem Roboter zugrundegelegt.

Dies wird dargestellt, indem die in Figur 3 angegebenen vier ICAS-Geräte ICAS_D1...4 sowie die erfindungsgemäße Steuereinrichtung ICAS_D einzeln mitsamt ihrer angedeuteten Funktion(en) TASK1...3 und/oder Schnittstellen in diesem System E-AI-SYSTEM dargestellt sind.

Zu erkennen ist, dass ein erstes erfindungsgemäßes Funksende-/Funkempfangsgerät ICAS_D1 und ein zweites erfindungsgemäßes Funksende-/Funkempfangsgerät ICAS_D2 durch das erfindungsgemäße Verfahren derart konfiguriert werden, dass sie zusammen eine erste Funktion TASK1 bereitstellen, die in einer Aufrechterhaltung einer verteilten, "Multiple-Input Multiple-Output"- MIMO-Verbindung besteht. Sie bilden also ein MIMO-Array, welches Funkwellen von einem weiteren beliebigen Funksende-/Funkempfangsgerät, beispielsweise einem Transmitter und/oder Receiver O_TX_RX, nach Art des MIMO empfangen können, und speziellere Funktionen bzw. besondere Eigenschaften im Zusammenhang mit elektromagnetischen Wellen, wie sie beispielsweise beim (MIMO) Radar und/oder im Rahmen von Funkkommunikation ausgenutzt werden, bieten. Der Roboter gemäß Beispiel wird also mit durch MIMO verfügbaren verbesserten, insbesondere Kommunikations-, Funktionen ausgestaltet.

Ferner ist zu erkennen, dass ein drittes Funksende-/Funkempfangsgerät ICAS_D3 als zweite Aufgabe TASK2 gemäß erfindungsgemäßem Verfahren derart konfiguriert ist, dass es eine einfache Radarerfassung ermöglicht. Es wird das dritte ICAS-Gerät ICAS_D3 mittels erfindungsgemäßem Verfahren also als Radarsensor konfiguriert und stellt diese Funktion dem Roboter zur Verfügung. Dies kann beispielsweise zum Erkennen von zu greifenden Gegenständen und/oder zu Hindernissen ("Physical Obstacle") PO genutzt werden; Letzteres um beispielsweise Kollisionen beim Bewegen des Roboters zu vermeiden.

Als eine Dritte Aufgabe TASK3 wird durch das vierte Funksende-/Funkempfangsgerät ICAS_D4 eine Lokalisierungsfunktion bereitgestellt und das vierte Funksende-/Funkempfangsgerät ICAS_D4 gemäß dem erfindungsgemäßen Verfahren, wie alle ICAS-Geräte ICAS_D1...4, durch die erfindungsgemäße Steuereinrichtung ICAS_C entsprechend konfiguriert. D.h. die Lokalisierungsfunktion, die das vierte Funksende-/Funkempfangsgerät ICAS_D4 integriert hat, wird für eine Selbstlokalisation eingerichtet. Auf die Anwendung im Roboter übertragen bedeutet das, dass dem Roboter seine Position im Raum und/oder die Position von Teilen vom Roboter, wie beispielsweise dem Arm, als aktuelle Positionsinformationen zur Verfügung stehen, um Prozesse entsprechend steuern zu können.

Die Lokalisation kann dabei gemäß dem so genannten "Angle of Arrival", dem so genannten "Time of Arrival" oder vergleichbarem Ansatz, realisiert sein, bei welchen, wie im Beispiel gezeigt, die Selbstlokalisation unter Zuhilfenahme von einem als Lokalisierungsanker LA konfigurierten Funksende-/Funkempfangsgerät erfolgen kann.

Zu erkennen ist, dass bei dem Ausführungsbeispiel des erfindungsgemäßen Verfahrens, die Steuereinrichtung ICAS_C die beteiligten ICAS-Geräte ICAS_D1...4 konfiguriert und ihnen Funktionen zuweist, hierzu auch zum Teil die einzelnen ICAS-Geräte ICAS_D1...4 zu Funktionsgruppen zusammenfasst. Dies alles erfolgt gemäß dem Ausführungsbeispiel des erfindungsgemäßen Verfahrens derart, dass das flexibel für endliche Zeiträume erfolgen kann und eine, mehrere oder alle der Funktionen eines ICAS-Gerätes ICAS _D1...4 bei Bedarf aktiviert oder deaktiviert werden können. Dies erfolgt über die erfindungsgemäße Rückkopplungsverbindung BI von den erfindungsgemäßen ICAS-Geräten ICAS_D1...4 zur erfindungsgemäßen Steuereinrichtung ICAS_C sowie die Hard- und Software der erfindungsgemäßen Steuereinrichtung ICAS_C.

Für die Aktivierung bzw. Deaktivierung, aber auch für die Steuerung aktiver Funktionen für einen konkreten gerade betriebenen, insbesondere industriellen Prozess, kann die erfindungsgemäße Steuereinrichtung ICAS_C gemäß Ausführungsbeispiel auch eine oder mehrere Verbindungen zu Informationsquellen aufweisen, die zur Generierung entsprechender Zustandsänderungen herbeiführender Steuersignale beitragen und/oder diese direkt bereitstellen können.

Die Steuereinrichtung ICAS_C berücksichtigt gemäß Ausführungsbeispiel des Verfahrens hierzu eine oder mehrere der folgenden Wissensbasen, nämlich
- eine Datenbasis EXPIRIENCE, die Informationen zu vergangenen Prozessausführungen und/oder vergangenen Zeitpunkten der aktuellen Aufgabenausführung beinhaltet, also die Historie berücksichtigt, so dass aktuelle Steuerungen zukünftiger Aktionen auf Erfahrung basiert erfolgen kann,
- alternativ oder ergänzend, insbesondere zur Parametrisierung, ein digitaler Zwilling DIGITAL _TWIN des jeweiligen involvierten E-AI-Systems E-AI_SYSTEM, um Daten über Zustände und aktuelle Aufgaben des E-AI-Systems E-AI-SYSTEM als Grundlage zukünftiger Aktionen heranzuziehen,
- und/oder kontextuelle Daten CONTEXT, aus Beobachtungen der aktuellen und/oder physischen Umgebung, beispielsweise Standort und/oder Zustand anderer, insbesondere benachbarter, E-AI-Systeme.

Die Ausführungsbeispiele tragen einzeln und/oder in Kombination unter anderem zu folgenden Vorteilen bei, die zusammengefasst gemeinsam mit teils in anderen Worten wiedergegebenen weiteren Einzelheiten der Ausgestaltungen bzw. Ausführungsbeispielen und vorteilhaften Weiterbildungen der Erfindung angegeben werden:
Die Erfindung ermöglicht den flexiblen Zugriff auf Funktionen von Funksende-/Funkempfangsgeräten, der neueren Funkstandards, insbesondere der 6. Generation und Folgenden bzw. Derivaten davon, die sich von heutigen Funksende-/Funkempfangsgeräten wie beispielswiese Smartphones oder industriellen Routern, wie beispielsweise dem SCALANCE M, dahingehend unterscheiden, dass sie mehr als nur die Kommunikation durch ihre drahtlosen Schnittstellen bereitstellen.

Hierdurch wird es möglich flexibel Geräte, wie beispielsweise FTS oder Industrieroboter, zum Beispiel mit Sensorfähigkeiten auszustatten, ohne sie mit separater Hardware auszustatten, indem das erfindungsgemäße Verfahren angewandt wird und unter anderem die erfindungsgemäße Steuereinrichtung ICAS_C eingeführt wird, die als eine Verwaltungseinheit die (Neu-)Konfiguration von Gerätefunktionen der erfindungsgemäßen ICAS-Geräte ICAS_D1...4 überwacht und steuert.

Der Erfindung gemäß kann der ICAS-Controller (Steuereinrichtung) ICAS_C über Backhaul-Verbindungen, d.h. die Rückkopplungsverbindung BI, mit einer Reihe von ICAS-Geräten ICAS_D1...4 verbunden werden, insbesondere können ICAS-Controller ICAS_C und ICAS-Geräte ICAS_C Teil eines E-AI-Systems E-AI-SYSTEM sein, wie zum Beispiel eines autonomen Industrieroboters.

Der ICAS-Controller ICAS_C kann dabei eine oder mehrere der folgenden Gegebenheiten berücksichtigen:
- Einen aktuellen Stand des Embodied AI Systems E-AI-SYSTEM, das beispielsweise on-board in einem eigenen Digital Twin DIGITAL_TWIN gespeichert ist.
- Die Aufgabe, die aktuell vom E-AI-System E-AI_SYSTEM ausgeführt wird, und zugehörige Erfahrungsdaten EXPIRIENCE, die vom E-AI-System E-AI_SYSTEM während früherer Ausführungen der aktuellen Aufgabe gesammelt wurden.
- Den Kontext CONTEXT des Embodied AI Systems, beispielsweise ein Digital Twin der physischen Umgebung des E-AI Gerätes E-AI-SYSTEM, inklusive der Standorte und Zustände anderer E-AI Systeme.
- Die aktuellen Parameter und Fähigkeiten aller ICAS-Geräte ICAS_D1...4 im, insbesondere durch über alle in den umgebenden E-AI-Systemen verfügbaren ICAS-Geräten gebildeten, Cluster.

Diese Informationen können dabei, beispielsweise in Form einer Datenbank oder als Parameter eines maschinellen Lernmodells dargestellt oder mit einem semantischen Graphen beschrieben, hinterlegt und zugreifbar sein.

Der ICAS-Controller ICAS_C kann logische, zusammenhängende Aufgabengruppen TASK1...3 in Form von Zuordnungen zu jedem ICAS-Gerät ICAS_D1...4 erzeugen, beispielsweise gemäß dem in Figur 4 gezeigten Ausführungsbeispiel:
- Erste Aufgabengruppe TASK1: ICAS-Geräte 1 & 2 ICAS_D1...2 sind so konfiguriert, dass sie vorübergehend ein verteiltes MIMO-Array bilden und eine drahtlose Kommunikationsverbindung aufrechterhalten, beispielsweise als Teil eines Mesh-Netzwerks, das von einem Schwarm von E-AI-Systemen gebildet wird.
- Zweite Aufgabengruppe TASK2: ICAS-Gerät 3 ICAS_D3 ist für eine Sensoraufgabe konfiguriert
- Dritte Aufgabengruppe TASK3: ICAS-Gerät 4 ICAS_D4 wird verwendet, um Signale zu empfangen, die für die Selbstlokalisierung benötigt werden.

Einer der wesentlichen Vorteile der durch die Erfindung gegebenen dynamischen Zuordnung von ICAS-Aufgaben TASK1...3 zu ICAS-Geräten ICAS _D1...4 besteht unter anderem darin, dass Kommunikations-, Energie- und Rechenressourcen, die mit einer bestimmten Funktion (Konnektivität, Lokalisierung, Sensorik) verbunden sind, nur dann belegt/verbraucht werden, wenn die Funktionalität auch tatsächlich benötigt wird.

Das heißt beispielsweise, dass nur wenn eine Anwendung des E-AI-Systems E-AI-SYSTEM den Standort des E-AI-Systems E-AI-SYSTEM kennen muss, das E-AI-System E-AI _SYSTEM die Steuereinrichtung, ICAS-Controller, ICAS_C auffordert, ein ICAS-Gerät ICAS_D1...4 für die Lokalisierung zu konfigurieren bzw. der ICAS-Controller durch die über das E-AI-System E-AI-SYSTEM vorliegenden Informationen diese Konfiguration selbständig beschließt.

Dies unterscheidet sich von der Verwendung einer festen Infrastruktur, beispielsweise Basisstationen im 5G/6G-Campus-netz, bei der, um den Standort eines E-AI-Systems zu finden, ständig Zeit- und Frequenzressourcen reserviert werden.

Im Grunde geht die Erfindung über alle aktuellen Lösungen hinaus, da sie alle diskrete Komponenten/Module verwenden, die alle für eine einzige Funktion reserviert sein würden.

Dieser erfindungsgemäße Vorteil ergibt sich unter anderem dadurch, dass durch die Rückkopplungsverbindung BI mittels der erfindungsgemäßen Steuereinrichtung ICAS_C Funktionen von erfindungsgemäßen, die Rückkopplungsverbindung BI aufweisenden, Geräten ICAS_D1...4 verwaltet werden können.

Die erfindungsgemäßen ICAS-Geräte ICAS _D1...4 können ihre Funktionen also dynamisch anpassen, wenn sich die Umgebung des Systems ändert, bzw. sie werden so konfiguriert, dass sie sich anpassen. Beispielsweise wird, wenn das E-AI-System E-AI-SYSTEM an einen anderen Ort verschoben wird, der Roboter beispielweise an einen anderen Ort zu einer mit anderen Robotern orchestrierten Aufgabendurchführung fährt, dies durch die Erfindung erfassbar und Zustände des E-AI-Systems E-AI-SYSTEM, das heißt die Aufgabegruppen TASK1...3 bzw. ihre Durchführung, können sich entsprechend ändern.

Die Erfindung ist nicht auf die beschriebenen Ausgestaltungen und Weiterbildungen beschränkt. Vielmehr sind alle unter den Schutzbereich der Ansprüche fallenden Weiterbildungen und Kombinationen von einzelnen, mehreren oder allen anspruchsgemäßen Merkmalen gemäß den Ansprüchen umfasst.

Soweit oben Ausdrücke verwendet wurden, die ein grammatikalisches Geschlecht und/oder andere zur Unterscheidung von Menschen geeignete Merkmale zeigen, implizieren oder als solche wahrgenommen werden können, gilt, dass diese Ausdrücke nicht trennend, sondern inklusiv verwendet wurden, d.h. dass alle Menschen - unabhängig von gegebenen, selbst angenommenen oder vermuteten individuellen Merkmalen - als gleichwertig betrachtet werden.

## Patentansprüche

1. Steuereinrichtung (ICAS_C) von zumindest einem in ein, insbesondere zur Interaktion mit zumindest einem maschinellen Prozess (E-AI_SYSTEM) beispielsweise in einem industriellen Umfeld, bildbares System integrierbaren ersten Funksende-/Funkempfangsgerät (ICAS_D), das derart ausgestaltet ist, dass es mit zumindest einer zeitlich zumindest temporär zur Kommunikation, auf Funksende-/Funkempfang von elektromagnetischen Wellen basierenden Lokalisation und/oder Sensorik betreibbaren, gemäß zumindest einem Funkkommunikationsstandard drahtlos ausgestalteten, ersten Schnittstelle (AIR) ausgestaltet ist, **dadurch gekennzeichnet, dass** die Steuereinrichtung (ICAS_C) eine zweite Schnittstelle (BI) aufweist, über welche mindestens ein Steuersignal an die ersten Funksende-/Funkempfangsgeräte (ICAS_D) derart übermittelt werden kann, dass das erste Funksende-/Funkempfangsgerät (ICAS_D) durch Empfang und/oder Interpretation des Steuersignals zumindest zu einer zeitlich zumindest temporären Bereitstellung und/oder Abschaltung von zumindest Teile der Kommunikation, Lokalisation und/oder der Sensorik bereitstellenden ersten Schnittstelle (AIR) derart konfigurierbar ausgestaltet ist, dass sie wahlweise zumindest zeitweise zur Kommunikation, Lokalisation und/oder Sensorik derart betrieben wird, dass der maschinelle Prozess (E-AI_SYSTEM) unter Zugreifen auf zumindest die durch den Betrieb von dem ersten Funksende-/ Funkempfangsgerät (ICAS_D) ausgetauschten Daten durchgeführt wird.

2. Steuereinrichtung nach dem vorhergehenden Anspruch, **dadurch gekennzeichnet, dass** die zweite Schnittstelle zu einer gemäß einem Funkkommunikationsstandard, insbesondere einem der Funkkommunikationsstandards der ersten Schnittstelle entsprechenden, drahtlosen Kommunikation ausgestaltet ist.

3. Steuereinrichtung nach einem der vorhergehenden Ansprüche, **dadurch gekennzeichnet, dass** es eine dritte zur drahtgebundenen Kommunikation ausgestaltete Schnittstelle aufweist, die derart ausgestaltet ist, dass die Steuereinrichtung mit einer mindestens die zweite Schnittstelle aufweisenden Einrichtung, insbesondere einem ersten Funksende-/Funkempfangsgerät, zumindest lösbar befestigt ist.

4. Steuereinrichtung nach dem vorhergehenden Anspruch, **dadurch gekennzeichnet, dass** die zweite Schnittstelle zur drahtgebundenen Kommunikation derart ausgestaltet ist, dass sie zusätzlich als dritte Schnittstelle betreibbar ist.

5. Steuereinrichtung nach einem der vorhergehenden Ansprüche, **dadurch gekennzeichnet, dass** über die erste, zweite und/oder dritte Schnittstelle eine Kommunikationsverbindung derart bereitstellbar ist, dass sie zumindest temporär zum kooperativen Ausführen von zumindest Teilen von Funktionen eines, insbesondere im industriellen Umfeld betreibbaren, Systems ausgestaltet ist.

6. Steuereinrichtung nach einem der vorhergehenden Ansprüche, **dadurch gekennzeichnet, dass** sie mit einer, insbesondere durch Nutzung der ersten, zweiten oder dritten Schnittstelle, vierten Schnittstelle zur Interaktion mit einem so genannten "Embodied Artificial Intelligence", E-AI-, System zur Beeinflussung mindestens einer physikalischen Größe, insbesondere im industriellen Umfeld, interagiert.

7. Steuereinrichtung nach dem vorhergehenden Anspruch, **dadurch gekennzeichnet, dass** das E-AI-System zumindest durch Maschinen, wie beispielsweise Roboterarme, so genannte "Computer Numerical Control"-, CNC-Maschinen, autonome Fahrzeuge, insbesondere stationäre und/oder mobile Roboter und/oder vergleichbare steuerbare, industriell einsetzbare steuerbare Einrichtungen, gebildet ist.

8. Steuereinrichtung nach einem der vorhergehenden Ansprüche, **gekennzeichnet durch** ein erstes Modul zur Erfassung ein oder mehrerer Parameter und/oder ein oder mehrere Status des Systems, insbesondere
a) einen, beispielsweise durch Abfrage zumindest eines Parameters eines im E-AI-System integrierten und/oder funktional zumindest temporär verbindbaren Digitalen Zwillings des E-AI-Systems ermittelbaren Zustand des E-AI-Systems,
b) eine aktuell vom E-AI-System ausgeführte Aufgabe, und/oder zu der Aufgabe zugehörige Historie, insbesondere vom E-AI-System während früherer Ausführungen der Aufgabe gesammelte Parameter und/oder Trainingsdaten,
c) einen Kontext des E-AI-Systems, beispielsweise der physischen Umgebung zumindest eines Teils des E-AI-Systems und/oder benachbarter E-AI-Systeme, physisch erfassbare erste Werte, wie beispielsweise den Standort benachbarter E-AI-Systeme, oder, durch einen Parameter des jeweiligen Digitalen Zwillings repräsentierte Werte, wie physikalische Größen,
d) die aktuellen Parameter und Fähigkeiten aller ICAS-Geräte im E-AI-System
des Systems aufweist.

9. Steuereinrichtung nach dem vorhergehenden Anspruch, **dadurch gekennzeichnet, dass** das erste Modul mit einer fünften Schnittstelle derart funktional verbindbar und betreibbar ist, dass die Erfassung eines Parameters oder mehrerer Parameter und/oder eines oder mehrerer Status des Systems durch Zugriff des ersten Moduls über die fünfte Schnittstelle
a) strukturiert in einer, insbesondere über die fünfte Schnittstelle verbundenen, Datenbank
b) strukturiert über die fünfte Schnittstelle abrufbare, durch ein ein maschinelles Lernmodell implementierendes zweites Modul aktuelle Zustände des Systems und/oder Teilen davon repräsentierende,
c) und/oder strukturiert über, einen semantischen Graphen repräsentierende,
abgespeicherte Daten und die Auswertung der Daten erfolgt.

10. Steuereinrichtung nach dem der vorhergehenden Anspruch, **gekennzeichnet durch** ein drittes Modul, das zur Durchführung der Erfassung, insbesondere zum Auslesen des ersten Wertes und/oder zweiten Wertes über eine Schnittstelle dient.

11. Funksende-/Funkempfangsgerät (ICAS_D), eingerichtet zum Betrieb in einem industriellen Umfeld, das derart ausgestaltet ist, dass es mit zumindest einer zeitlich zumindest temporär zur Kommunikation, auf Funksende-/Funkempfang von elektromagnetischen Wellen basierenden Lokalisation und/oder Sensorik betreibbaren, gemäß zumindest einem Funkkommunikationsstandard drahtlos ausgestalteten, ersten Schnittstelle (AIR) ausgestaltet ist, **dadurch gekennzeichnet, dass** es eine der zweiten Schnittstelle der Steuereinrichtung (ICAS_C) gemäß einem der vorhergehenden Ansprüche entsprechende Schnittstelle (BI) aufweist, wobei das erste Funksende-/Funkempfangsgerät (ICAS_D) derart ausgestaltet und die der zweiten Schnittstelle (BI) entsprechende Schnittstelle derart funktional verbindbar und betreibbar ist, dass durch Empfang und/oder Interpretation eines der Steuersignale über die der zweiten Schnittstelle (BI) zu einer zeitlich zumindest temporären Bereitstellung und/oder Abschaltung von zumindest Teile der Kommunikation, Lokalisation und/oder zumindest Teile der Sensorik bereitstellenden ersten Schnittstelle (AIR) derart konfigurierbar ausgestaltet ist, dass sie wahlweise zumindest zeitweise zur Kommunikation, Lokalisation und/oder Sensorik betrieben wird.

12. System zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät,
**gekennzeichnet durch** zumindest eine Steuereinrichtung gemäß einem der Ansprüche 1 bis 10, und zumindest einem Funksende-/Funkempfangsgerät gemäß dem vorhergehenden Anspruch.

13. Verfahren zur Steuerung von zumindest einem in ein, insbesondere zur Interaktion mit zumindest einem maschinellen Prozess, beispielsweise in einem industriellen Umfeld, bildbares System integrierbaren ersten Funksende-/Funkempfangsgerät, **gekennzeichnet durch** zumindest eine Steuereinrichtung gemäß einem der Ansprüche 1 bis 10 und zumindest einem ersten Funksende-/Funkempfangsgerät gemäß dem Anspruch 11, die derart funktional verbunden und betrieben werden, dass die Steuereinrichtung zumindest Teile der Funktionen des ersten Funksende-/Funkempfangsgeräts über die zweite Schnittstelle steuert, wobei die Steuerung derart erfolgt, dass die Integration, insbesondere der maschinelle Prozess, zumindest unter Nutzung des Kommunikations-, Lokalisations- und/oder Sensorikbetriebs des ersten Funksende-/Funkempfangsgeräts zumindest zeitweise durchgeführt wird.

14. Verfahren nach dem vorhergehenden Anspruch, **dadurch gekennzeichnet, dass** die Steuereinrichtung eine Vielzahl von ersten Funksende-/Funkempfangsgeräten steuert.

15. Verfahren nach dem vorhergehenden Verfahrensanspruch, **dadurch gekennzeichnet, dass** zumindest zwei erste Funksende-/Funkempfangsgeräte durch die Steuereinrichtung derart gesteuert werden, dass sie zumindest zeitweise, insbesondere als Teil eines, beispielsweise in der Art des Mesh, gebildeten Netzwerks, eine Kommunikationsverbindung halten, wobei sie in dieser Zeit ein Radar in der Art des so genannten "Multiple Input Multiple Output" MIMO-Array bilden.

16. Verfahren nach einem der vorhergehenden Verfahrensansprüche,
**dadurch gekennzeichnet, dass** zumindest eines der Vielzahl von ersten Funksende-/Funkempfangsgeräten durch die Steuereinrichtung zum Empfang von Signalen derart gesteuert wird, dass aufgrund der empfangenen Signale eine Lokalisation, insbesondere der eigenen Position, durchgeführt wird.

17. Verfahren nach einem der vorhergehenden Verfahrensansprüche,
**dadurch gekennzeichnet, dass** zumindest eines der Vielzahl von ersten Funksende-/Funkempfangseinrichtungen durch die Steuereinrichtung derart gesteuert wird, dass diese als Sensor zumindest zeitweise mindestens einen Wert zumindest einer physikalischen Größe erfasst.

## Claims

1. Apparatus (ICAS_C) for controlling at least one first radio transmission/radio reception device (ICAS_D) that can be integrated in a system that can be formed, in particular for interaction with at least one machine process (E-AI_SYSTEM), for example in an industrial environment, said radio transmission/radio reception device being configured in such a manner that it is configured with at least one first interface (AIR) that can be at least temporarily operated for communication, localization based on radio transmission/radio reception of electromagnetic waves and/or sensing and is configured to be wireless according to at least one radio communication standard,
**characterized in that** the control apparatus (ICAS_C) has a second interface (BI) that can be used to transmit at least one control signal to the first radio transmission/radio reception devices (ICAS_D) in such a manner that the first radio transmission/radio reception device (ICAS_D) is designed to be able to be configured, by receiving and/or interpreting the control signal, at least to at least temporarily provide and/or disconnect the first interface (AIR) providing at least parts of the communication, localization and/or sensing in such a manner that the interface is optionally operated at least temporarily for communication, localization and/or sensing in such a manner that the machine process (E-AI_SYSTEM) is carried out by accessing at least the data exchanged by the operation of the first radio transmission/radio reception apparatus (ICAS_D).

2. Control apparatus according to the preceding claim, **characterized in that** the second interface is configured for wireless communication according to a radio communication standard, in particular corresponding to one of the radio communication standards of the first interface.

3. Control apparatus according to one of the preceding claims, **characterized in that** it has a third interface which is configured for wired communication and is configured in such a manner that the control apparatus is at least releasably fastened to an apparatus having at least the second interface, in particular a first radio transmission/radio reception device.

4. Control apparatus according to the preceding claim, **characterized in that** the second interface is configured for wired communication in such a manner that it can be additionally operated as a third interface.

5. Control apparatus according to one of the preceding claims, **characterized in that** a communication connection can be provided via the first, second and/or third interface in such a manner that it is at least temporarily configured to cooperatively perform at least parts of functions of a system, in particular a system that can be operated in the industrial environment.

6. Control apparatus according to in one of the preceding claims, **characterized in that** it interacts with a fourth interface, in particular by using the first, second or third interface, for interaction with a so-called "Embodied Artificial Intelligence", E-AI, system for influencing at least one physical variable, in particular in the industrial environment.

7. Control apparatus according to the preceding claim, **characterized in that** the E-AI system is formed at least by machines, for example robot arms, so-called "Computer Numerical Control", CNC, machines, autonomous vehicles, in particular stationary and/or mobile robots, and/or comparable controllable apparatuses that can be used industrially.

8. Control apparatus according to one of the preceding claims, **characterized by** a first module for capturing one or more parameters and/or one or more statuses of the system, in particular
a) a state of the E-AI system that can be determined, for example, by querying at least one parameter of a digital twin of the E-AI system that is integrated in the E-AI system and/or can be at least temporarily functionally connected,
b) a task currently being performed by the E-AI system and/or a history associated with the task, in particular parameters and/or training data collected by the E-AI system during earlier performances of the task,
c) a context of the E-AI system, for example the physical environment of at least one part of the E-AI system and/or adjacent E-AI systems, physically capturable first values, for example the location of adjacent E-AI systems, or values represented by a parameter of the respective digital twin, such as physical variables,
d) the current parameters and capabilities of all ICAS devices in the E-AI system
of the system.

9. Control apparatus according to the preceding claim, **characterized in that** the first module can be functionally connected to a fifth interface and operated in such a manner that one or more parameters and/or one or more statuses of the system are captured by the first module accessing, via the fifth interface,
a) data stored in a structured manner in a database, in particular a database connected via the fifth interface,
b) data which are stored in a structured manner, can be retrieved via the fifth interface
by a second module implementing a machine learning model and representing current states of the system and/or parts thereof,
c) and/or data stored in a structured manner and represented using a semantic graph
and the data are evaluated.

10. Control apparatus according to the preceding claim, **characterized by** a third module which is used to capture, in particular read, the first value and/or second value via an interface.

11. Radio transmission/radio reception device (ICAS_D) configured for operation in an industrial environment and configured in such a manner that it is configured with at least one first interface (AIR) that can be operated at least temporarily for communication, localization based on radio transmission/radio reception of electromagnetic waves and/or sensing and is configured to be wireless according to at least one radio communication standard,
**characterized in that** it has an interface (BI) corresponding to the second interface of the control apparatus (ICAS_C) according to one of the preceding claims, wherein the first radio transmission/radio reception device (ICAS_D) is configured, and the interface corresponding to the second interface (BI) can be functionally connected and operated, in such a manner that, by receiving and/or interpreting one of the control signals via the second interface (BI), it is designed to be able to be configured to at least temporarily provide and/or disconnect the first interface (AIR) providing at least parts of the communication, localization and/or at least parts of the sensing in such a manner that it is optionally operated at least temporarily for communication, localization and/or sensing.

12. System for controlling at least one first radio transmission/radio reception device that can be integrated in a system that can be formed, in particular for interaction with at least one machine process, for example in an industrial environment,
**characterized by** at least one control apparatus according to one of Claims 1 to 10 and at least one radio transmission/radio reception device according to the preceding claim.

13. Method for controlling at least one first radio transmission/radio reception device that can be integrated in a system that can be formed, in particular for interaction with at least one machine process, for example in an industrial environment,
**characterized by** at least one control apparatus according to one of Claims 1 to 10 and at least one first
radio transmission/radio reception device according to Claim 11, which are functionally connected and operated in such a manner that the control apparatus controls at least parts of the functions of the first
radio transmission/radio reception device via the second interface, wherein the control is carried out in such a manner that the integration, in particular the machine process, is at least temporarily carried out at least using the communication, localization and/or sensing operation of the first radio transmission/radio reception device.

14. Method according to the preceding claim,
**characterized in that** the control apparatus controls a multiplicity of first radio transmission/radio reception devices.

15. Method according to the preceding method claim, **characterized in that** at least two first radio transmission/radio reception devices are controlled by the control apparatus in such a manner that they at least temporarily maintain a communication connection, in particular as part of a network, for example formed in the manner of the mesh, in which case they form a radar in the manner of the so-called "Multiple Input Multiple Output", MIMO, array in this time.

16. Method according to one of the preceding method claims, **characterized in that** at least one of the multiplicity of first radio transmission/radio reception devices is controlled by the control apparatus to receive signals in such a manner that localization, in particular of its own position, is carried out on the basis of the received signals.

17. Method according to one of the preceding method claims, **characterized in that** at least one of the multiplicity of first radio transmission/radio reception apparatuses is controlled by the control apparatus in such a manner that, as a sensor, it at least temporarily captures at least one value of at least one physical variable.

## Revendications

1. Dispositif de commande (ICAS_C) d'au moins un premier émetteur-récepteur radio (ICAS_D) qui peut être intégré dans un système pouvant être imagé, en particulier afin d'interagir avec au moins un procédé mécanique (E-AI_SYSTEM), par exemple dans un environnement industriel, et qui est conçu avec au moins une première interface (AIR) conçue sans fil selon au moins une norme de communication radio et pouvant être utilisée au moins temporairement pour la communication, la localisation basée sur l'émission/réception radio d'ondes électromagnétiques et/ou la détection,
**caractérisé en ce que** le dispositif de commande (ICAS_C) présente une seconde interface (BI) par l'intermédiaire de laquelle au moins un signal de commande peut être transmis aux premiers émetteurs-récepteurs radio (ICAS_D) de telle manière que le premier émetteur-récepteur radio (ICAS_D) peut être configuré pour, grâce à la réception et/ou l'interprétation du signal de commande, au moins fournir et/ou désactiver de manière au moins temporaire au moins de parties de la première interface (AIR) fournissant la communication, la localisation et/ou la détection, de telle manière qu'il est utilisé au choix au moins temporairement pour la communication, la localisation et/ou la détection de telle manière que le procédé mécanique (E-AI_SYSTEM) est mis en œuvre en accédant au moins aux données échangées grâce au fonctionnement du premier émetteur-récepteur radio (ICAS _D) .

2. Dispositif de commande selon la revendication précédente, **caractérisé en ce que** la seconde interface est conçue pour une communication sans fil d'une manière qui correspond à une norme de communication radio, en particulier à une des normes de communication radio de la première interface.

3. Dispositif de commande selon l'une quelconque des revendications précédentes, **caractérisé en ce qu'**il présente une troisième interface conçue pour la communication filaire et conçue de telle manière que le dispositif de commande est fixé au moins de manière amovible à un dispositif présentant au moins la seconde interface, en particulier à un premier émetteur/récepteur radio.

4. Dispositif de commande selon la revendication précédente, **caractérisé en ce que** la seconde interface est conçue pour la communication filaire de telle manière qu'elle peut être utilisée de manière supplémentaire comme troisième interface.

5. Dispositif de commande selon l'une quelconque des revendications précédentes, **caractérisé en ce qu'**une connexion de communication peut être fournie par l'intermédiaire de la première, la seconde et/ou la troisième interface de telle manière qu'elle est conçue au moins temporairement pour mettre en œuvre de manière coopérative au moins certaines parties des fonctions d'un système pouvant en particulier être exploité dans un environnement industriel.

6. Dispositif de commande selon l'une quelconque des revendications précédentes, **caractérisé en ce qu'**il interagit avec une quatrième interface, en particulier en utilisant la première, la seconde ou la troisième interface, afin d'interagir avec ce que l'on appelle un système E-AI, « Embodied Artificial Intelligence », permettant d'influencer au moins une grandeur physique, en particulier dans un environnement industriel.

7. Dispositif de commande selon la revendication précédente, **caractérisé en ce que** le système E-AI est formé au moins par des machines, telles que des bras de robot, des machines CNC, « Computer Numerical Control », des véhicules autonomes, en particulier des robots stationnaires et/ou mobiles et/ou des dispositifs comparables pouvant être commandés et utilisés dans l'industrie.

8. Dispositif de commande selon l'une quelconque des revendications précédentes, **caractérisé par** un premier module permettant d'enregistrer un ou plusieurs paramètre(s) et/ou un ou plusieurs état(s) du système, en particulier présentant
a) un état du système E-AI pouvant être déterminé, par exemple en interrogeant au moins un paramètre d'un jumeau numérique du système E-AI intégré dans le système E-AI et/ou pouvant être connecté de manière fonctionnelle et au moins temporaire à celui-ci,
b) une tâche en cours d'exécution par le système E-AI et/ou un historique associé à la tâche, en particulier des paramètres et/ou des données d'entraînement collectés par le système E-AI lors d'exécutions précédentes de ladite tâche,
c) un contexte du système E-AI, par exemple de l'environnement physique d'au moins une partie du système E-AI et/ou des systèmes E-AI voisins, des premières valeurs physiquement détectables, telles que l'emplacement des systèmes E-AI voisins, ou des valeurs représentées par un paramètre du jumeau numérique respectif, telles que des grandeurs physiques,
d) les paramètres et capacités actuels de tous les appareils ICAS au sein du système E-AI du système.

9. Dispositif de commande selon la revendication précédente, **caractérisé en ce que** le premier module peut être connecté et exploité de manière fonctionnelle avec une cinquième interface de telle manière que l'acquisition d'un ou de plusieurs paramètre(s) et/ou d'un ou de plusieurs état(s) du système se fait par l'accès du premier module, par l'intermédiaire de la cinquième interface, sur des données enregistrées
a) de manière structurée dans une base de données, en particulier connectée par l'intermédiaire de la cinquième interface
b) de manière structurée parmi des données stockées, récupérables par l'intermédiaire de la cinquième interface, représentant les états actuels du système et/ou de certaines de ses parties grâce à un deuxième module mettant en œuvre un modèle d'apprentissage automatique,
c) et/ou de manière structurée parmi des données stockées représentant un graphique sémantique
et en évaluant les données.

10. Dispositif de commande selon l'une quelconque des revendications précédentes, **caractérisé par** un troisième module qui sert à mettre en œuvre l'enregistrement, en particulier à lire la première valeur et/ou la seconde valeur par l'intermédiaire d'une interface.

11. Émetteur/récepteur radio (ICAS_D), conçu pour fonctionner dans un environnement industriel, et conçu avec au moins une première interface (AIR) conçue sans fil conformément à au moins une norme de communication radio et pouvant être utilisée au moins temporairement pour la communication, la localisation basée sur l'émission/réception radio d'ondes électromagnétiques et/ou la détection,
**caractérisé en ce qu'**il présente une interface (BI) correspondant à la seconde interface du dispositif de commande (ICAS_C) selon l'une quelconque des revendications précédentes, dans lequel le premier émetteur/récepteur radio (ICAS_D) est conçu, et l'interface correspondant à la seconde interface (BI) peut être connectée et exploitée de manière fonctionnelle, de manière à pouvoir, grâce à la réception et/ou à l'interprétation d'un des signaux de commande par l'intermédiaire de la première interface (AIR) fournissant la seconde interface (BI) en vue de la fourniture et/ou de la désactivation au moins temporaire d'au moins certaines parties de la communication, de la localisation et/ou d'au moins des parties de la détection, être configuré de manière à pouvoir être utilisé au moins temporairement pour la communication, la localisation et/ou la détection.

12. Système de commande d'au moins un premier émetteur-récepteur radio pouvant être intégré dans un système pouvant être formé en particulier en vue d'interagir avec au moins un procédé mécanique, par exemple dans un environnement industriel,
**caractérisé par** au moins un dispositif de commande selon l'une quelconque des revendications 1 à 10, et au moins un émetteur/récepteur radio selon la revendication précédente.

13. Système de commande d'au moins un premier émetteur-récepteur radio pouvant être intégré dans un système pouvant être formé en particulier en vue d'interagir avec au moins un procédé mécanique, par exemple dans un environnement industriel,
**caractérisé par** au moins un dispositif de commande selon l'une quelconque des revendications 1 à 10 et au moins un premier émetteur/récepteur radio selon la revendication 11, qui sont connectés et exploités de manière fonctionnelle de telle manière que le dispositif de commande commande au moins des parties des fonctions du premier émetteur/récepteur radio par l'intermédiaire de la seconde interface, dans lequel la commande intervient de telle manière que l'intégration, en particulier le procédé mécanique, est mise en œuvre au moins temporairement en utilisant le mode de communication, de localisation et/ou de détection du premier émetteur/récepteur radio.

14. Procédé selon la revendication précédente, **caractérisé en ce que** le dispositif de commande commande une pluralité de premiers émetteurs/récepteurs radio.

15. Procédé selon la revendication précédente, **caractérisé en ce qu'**au moins deux premiers émetteurs/récepteurs radio sont commandés grâce au dispositif de commande de manière à maintenir au moins temporairement une connexion de communication, en particulier en tant que partie d'un réseau formé, par exemple de type maillé, lesdits premiers émetteurs/récepteurs radio formant un radar du type de ce que l'on appelle un réseau MIMO, « Multiple Input Multiple Output ».

16. Procédé selon l'une quelconque des revendications précédentes, **caractérisé en ce qu'**au moins un parmi la pluralité de premiers émetteurs/récepteurs radio est commandé grâce au dispositif de commande afin de recevoir des signaux de telle manière qu'une localisation, en particulier de sa propre position, est mise en œuvre en se basant sur les signaux reçus.

17. Procédé selon l'une quelconque des revendications précédentes, **caractérisé en ce qu'**au moins un parmi la pluralité de premiers émetteurs/récepteurs radio est commandé grâce au dispositif de commande de telle manière que celui-ci, en tant que capteur, enregistre au moins temporairement au moins une valeur d'au moins une grandeur physique.
